# EUROPEAN PATENT APPLICATION

(11) **EP 1 744 109 A2**
(43) Date of publication of application: **17.01.2007**
(21) Application number: 06014396.3
(22) Date of filing: 11.07.2006
(51) Int. Cl.: F25B 27/00, F25B 13/00

(54) **Cogeneration system**

(30) Priority: 12.07.2005 KR 20050062768
(71) Applicant: LG ELECTRONICS INC., Seoul 150-010 (KR)
(72) Inventor: Cho, Eun Jun, Sosa-ku Buchun-si Kyunggi-do 422-060 (KR); Ha, Sim Bok, Kyungki-do 423-010 (KR); Chung, Baik Young, -dong Kyeyang-ku Inchun-si 407-710 (KR); Kim, Cheol Min, Youngdeungpo-ku Seoul 150-054 (KR); Chang, Se Dong, Kwangmyung-si Kyungki-do 423-060 (KR)
(74) Representative: Urner, Peter

(57) **Abstract**

A cogeneration system is constructed such that the waste heat recovered from the engine (52) is supplied to the heat pump type air conditioner (100) through the waste heat supplying heat exchanger (70), thereby maximizing heating capacity and efficiency. A waste heat supplying heat exchanger connecting conduit (80) is formed so as to guide a refrigerant emerging from an indoor unit (101) to enter an outdoor unit (102) through the waste heat supplying heat exchanger (70), so that the flow path between the waste heat supplying heat exchanger and the heat pump type air conditioner is minimized, thereby reducing installation costs and flow resistance.

## Description

### BACKGROUND OF THE INVENTION

### 1. Field of the Invention

The present invention relates to a cogeneration system, and more particularly to, a cogeneration system, which improves heating capacity and efficiency by supplying waste heat of an engine or the like to a heat pump type air conditioner by a waste heat supplying heat exchanger, and which operates an engine and a generator according to operation signals from an air conditioner, thereby minimizing the flow path between the heat pump type air conditioner and the waste heat supplying heat exchanger, and reducing installation costs and flow resistance.

### 2. Description of the Background Art

In general, a cogeneration system is a system that can produce both electricity and heat from a single energy source.

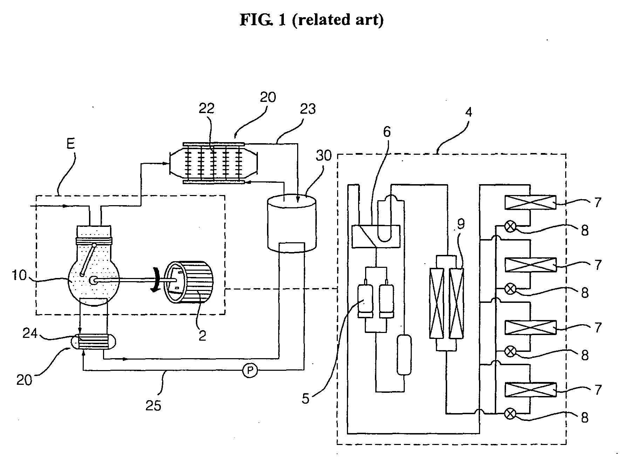

FIG. 1 is a block diagram schematically showing a cogeneration system in accordance with the prior art.

The cogeneration system in accordance with the prior art includes, as shown in FIG. 1, a generator 2 which generates electric power, a drive source 10 which operates to drive the generator 2, and generates heat, such as an engine (hereinafter, the drive source 10 will be referred to as an "engine"), a waste heat recoverer 20 which recovers waste heat generated from the engine 10, and a heat consumer 30 which utilizes the waste heat recovered by the waste heat recoverer 20, such as a thermal storage tank.

The electric power generated from the generator 2 is supplied to various electric home appliances including a heat pump type air conditioner 4 and various home illumination devices.

The generator 2 and engine 10 are installed in an engine room (E), which is defined separately from the heat consumer 30.

The heat pump type air conditioner 4 includes compressors 5, a 4-way valve 6, indoor heat exchangers 7, expansion devices 8, and outdoor heat exchangers 9.

When the heat pump type air conditioner 4 operates in cooling mode, each compressor 5 compresses a refrigerant introduced thereinto. The compressed refrigerant passes through the 4-way valve 6, outdoor heat exchangers 9, expansion devices 8, and indoor heat exchangers 7, in this order, and returns to the compressors 5 through the 4-way valve 6. In this case, each outdoor heat exchanger 9 functions as a condenser, and each indoor heat exchanger 7 functions as an evaporator to absorb heat from indoor air.

On the other hand, when the heat pump type air conditioner 4 operates in heating mode, the refrigerant compressed in each compressor 5 passes through the 4-way valve 6, indoor heat exchangers 7, expansion devices 8, and outdoor heat exchangers 9, in this order, and returns to the compressors 9 through the 4-way valve 6. In this case, each outdoor heat exchanger 9 functions as an evaporator, and each indoor heat exchanger 7 functions as a condenser to heat indoor air.

The waste heat recoverer 20 includes an exhaust gas heat exchanger 22, which absorbs heat from exhaust gas discharged from the engine 10, and a cooling water heat exchanger 24, which absorbs heat from cooling water used to cool the engine 10.

The exhaust gas heat exchanger 22 is connected to the heat consumer 30 via a first heat supply line 23. Accordingly, the exhaust gas heat exchanger 22 can transfer the waste heat absorbed from the exhaust gas of the engine 10 to the heat consumer 30 via the first heat supply line 23

The cooling water heat exchanger 24 is connected to the heat consumer 30 via a second heat supply line 25. Accordingly, the cooling water heat exchanger 24 can transfer the waste heat absorbed from the cooling water of the engine 10 to the heat consumer 30 via the second heat supply line 25.

However, the conventional cogeneration system has a problem in that the waste heat recovered by the exhaust gas heat exchanger 22 and the cooling water heat exchanger 24 is only used for hot water supply, warm water or the like in the heat consumer 30, so that the efficiency of the cogeneration system cannot be maximized.

### SUMMARY OF THE INVENTION

The present invention has been made in an effort to solve the above prior art problem, and provide a cogeneration system capable of maximizing the efficiency thereof by utilizing waste heat of an engine or the like in a heat pump type air conditioner by a waste heat supplying heat exchanger, and minimizing a flow path for guiding a refrigerant to the waste heat supplying heat exchanger.

To achieve these and other advantages and in accordance with the purpose of the present invention, as embodied and broadly described herein, there is provided a cogeneration system, including: a generator; a drive source which operates to drive the generator, and generates heat; a waste heat recovery unit which recovers the waste heat of the driving source; a heat pump type air conditioner which is supplied with electric power from the generator, and includes an indoor unit and outdoor unit; a waste heat supplying heat exchanger which supplies the heat recovered by the waste heat recovery unit to the heat pump type air conditioner; and a waste heat supplying heat exchanger connecting conduit adapted to guide a refrigerant emerging from the indoor unit during a heating operation of the heat pump type air conditioner to enter the outdoor unit through the waste heat supplying heat exchanger.

The waste heat supplying connecting conduit includes an indoor unit-connecting conduit, which connects the waste heat supplying heat exchanger and the indoor unit and an outdoor unit connecting conduit, which connects the waste heat supplying heat exchanger and the outdoor unit.

A first bypass conduit is formed at the waste heat supplying heat exchanger connecting conduit to guide the refrigerant emerging from the outdoor unit during a cooling operation of the heat pump type air conditioner to bypass the waste heat supplying heat exchanger.

A first non-return valve is arranged at the first bypass to prevent reverse flow of the refrigerant emerging from the indoor unit during the heating operation of the heat pump type air conditioner to the first bypass conduit.

An expansion valve is arranged at the waste heat supplying heat exchanger connecting conduit to expand the refrigerant introduced into the waste heat supplying heat exchanger during the heating operation of the heat pump type air conditioner.

A second bypass conduit is formed at the waste heat supplying heat exchanger connecting conduit to bypass the expansion valve according to an outdoor temperature, and a first heating valve is arranged at the second bypass conduit has to open and close the second bypass conduit.

A second non-return valve is arranged at the waste heat supplying heat exchanger connecting conduit to prevent reverse flow of the refrigerant emerging from the outdoor heat exchanger during the heating operation of the heat pump type air conditioner to the waste heat supplying heat exchanger.

The outdoor unit has an outdoor heat exchanger connecting conduit for connecting the outdoor unit connecting conduit and the outdoor heat exchanger and a compressor connecting conduit for connecting the outdoor unit connecting conduit and a suction side of the compressor in the outdoor unit.

A second heating valve is arranged at the compressor connecting conduit to open the compressor connecting conduit when the heat pump type air conditioner is in a heating mode and the outdoor temperature is lower than a set temperature.

The outdoor heat exchanger connecting conduit consists of a cooling path adapted to guide the refrigerant passed through the outdoor heat exchanger during a cooling operation of the heat pump type air conditioner to flow therethough, and a heating path adapted to guide the refrigerant passed through the waste heat supplying heat exchanger to enter the outdoor heat exchanger when the heat pump type air conditioner is in a heating mode and the outdoor temperature is higher than a set temperature.

A cooling valve is arranged at cooling path to open the cooling path during the cooling operation of the heat pump type air conditioner.

An outdoor expansion valve is arranged at the heating path to expand the refrigerant passing through the heating path.

The thus-constructed cogeneration system in accordance with the invention is constructed such that the waste heat recovered from the engine is supplied to the heat pump type air conditioner through the waste heat supplying heat exchanger, thereby maximizing heating capacity and efficiency.

Additionally, the waste heat supplying heat exchanger connecting conduit is formed so as to guide the refrigerant emerging from the indoor unit to enter the outdoor unit through the waste heat supplying heat exchanger, so that the flow path between the waste heat supplying heat exchanger and the heat pump type air conditioner is minimized, thereby reducing installation costs and flow resistance.

Additionally, it is advantageous in that it is easy to connect the waste heat supplying heat exchanger even when installing additional indoor and outdoor units.

Additionally, it is advantageous in that it is possible to provide a constant heating capacity irrespective of outdoor temperature and prevent frost formation on the outdoor heat exchanger because the refrigerant is evaporated by the waste heat supplying heat exchanger when the heat pump type air conditioner operates in the heating mode and the outdoor temperature is lower than a set temperature.

Additionally, it is advantageous in that it is possible to operate the heat pump type air conditioner only by an external power source because the outdoor heat exchanger alone can be used as an evaporator when the heat pump type air conditioner operates in the heating mode and the outdoor temperature is higher than a set temperature.

Additionally, it is advantageous in that both the waste heat supplying heat exchanger and the outdoor heat exchanger can be used as an evaporator.

### BRIEF DESCRIPTION OF THE DRAWINGS

In the drawings:
FIG. 1 is a schematic view of a cogeneration system in accordance with the prior art;
FIG. 2 is a schematic view of a cogeneration system in accordance with the present invention when a heat pump type air conditioner operates in a cooling mode;
FIG. 3 is a schematic view of the cogeneration system in accordance with the present invention when the heat pump type air conditioner operates in a cooling mode and the outdoor temperature is lower than a set temperature; and
FIG. 4 is a schematic view of the cogeneration system in accordance with the present invention when the heat pump type air conditioner operates in the heating mode and the outdoor temperature is higher than a set temperature.

### DETAILED DESCRIPTION OF THE PREFERRED EMBODIMENTS

Hereinafter, an exemplary embodiment of a cogeneration system in accordance with the invention will be described with reference to the accompanying drawings.

There may be a plurality of exemplary embodiments of the cogeneration system and the method for controlling the same in accordance with the invention, but the most preferred embodiment will be described hereinafter.

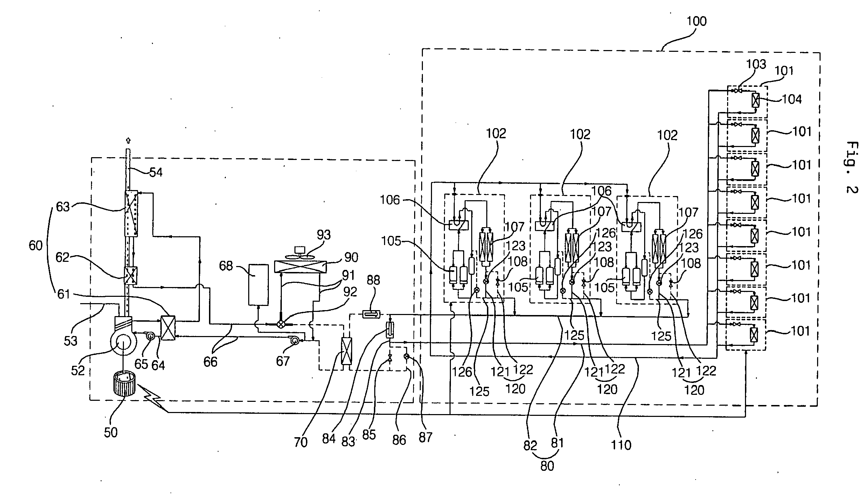

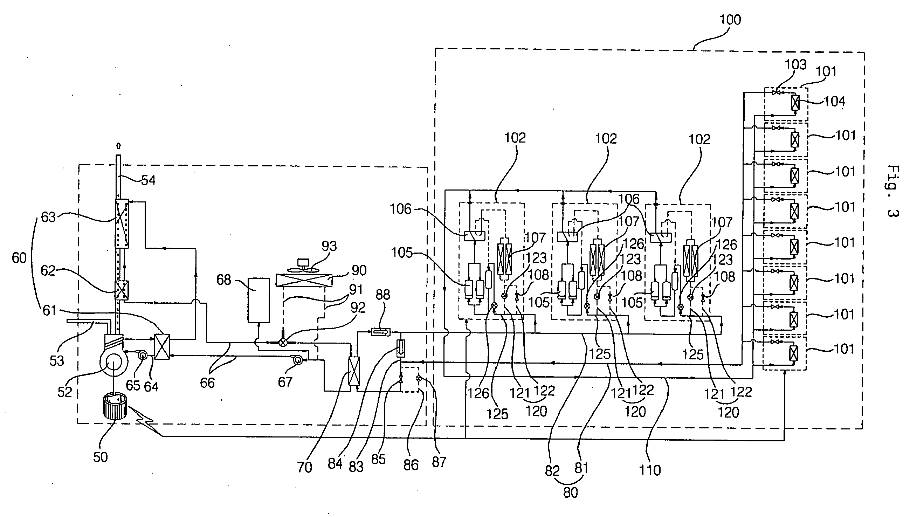

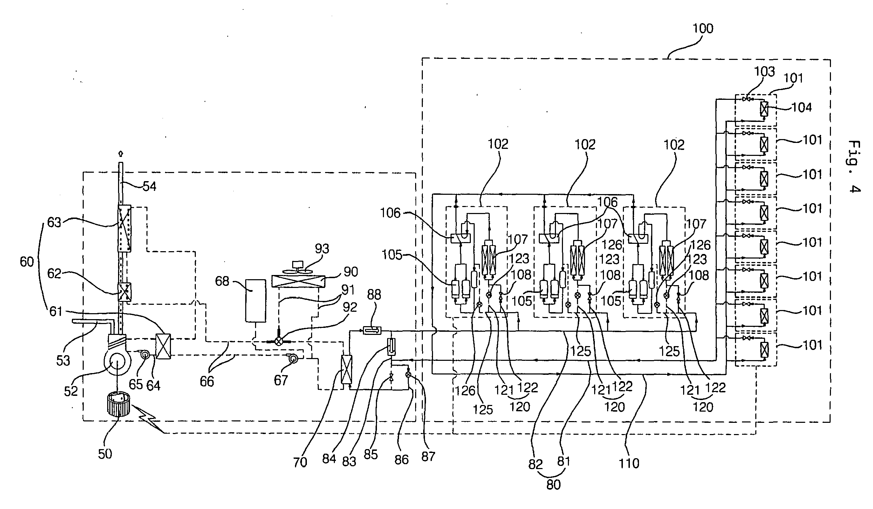

FIG. 2 is a schematic view of a cogeneration system in accordance with the present invention when a heat pump type air conditioner operates in a cooling mode. FIG. 3 is a schematic view of the cogeneration system in accordance with the present invention when the heat pump type air conditioner operates in a cooling mode and the outdoor temperature is lower than a set temperature. FIG. 4 is a schematic view of the cogeneration system in accordance with the present invention when the heat pump type air conditioner operates in the heating mode and the outdoor temperature is higher than a set temperature.

The cogeneration system in accordance with the embodiment of the present invention includes, as shown in FIGS. 2 to 4, a generator 50, a drive source which operates to drive the generator 50, and generates heat, a waste heat recovery unit 60 which recovers the waste heat of the driving source, a heat pump type air conditioner 1000 which is supplied with electric power from the generator 50, and includes an indoor unit 101 and outdoor unit 102, a waste heat supplying heat exchanger 70 which supplies the heat recovered by the waste heat recovery unit 60 to the heat pump type air conditioner 100, and a waste heat supplying heat exchanger connecting conduit 80 adapted to guide a refrigerant emerging from the indoor unit 101 during a heating operation of the heat pump type air conditioner 100 to enter the outdoor unit 102 through the waste heat supplying heat exchanger 70.

The generator 50 may be an AC generator or a DC generator. The generator 50 includes a rotor coupled to an output shaft of the drive source so that the generator 50 generates electric power during rotation of the output shaft.

The generator 50 is connected via an electrical power line 51 in order to supply the generated electric power.

The drive source comprises a fuel cell or an engine 52, which operates using fossil fuel such as gas or petroleum. The following description will be given only in conjunction with the case in which the drive source comprises an engine 52.

A fuel injection port 53 for injecting fuel such as gas or petroleum and an exhaust tube 54, through which exhaust gas discharged from the engine 52 passes, are installed at the engine 52.

The waste heat recovery unit 60 includes a cooling water heat exchanger 61 connected to the engine 52 via a cooling water line 64 to recover heat of cooling water of the engine 52, a first exhaust gas heat exchanger 62 arranged at the exhaust port 54 to recover heat of exhaust gas discharged from the engine 52, and a second exhaust gas heat exchanger 63 arranged at the exhaust port 54 to recover the residual heat of the exhaust gas that has passed through the first exhaust gas heat exchanger 62.

A cooling water circulation pump 65 is arranged in the cooling water line 64 to cause cooling water to be circulated.

The cooling water heat exchanger 61, first exhaust gas heat exchanger 62, and second exhaust gas heat exchanger 63 are connected to the waste heat supplying heat exchanger 70 via a heat transfer unit.

The heat transfer unit includes a heat medium circulation conduit 66 to guide the heat medium to be circulated through the cooling water heat exchanger 61, second exhaust gas heat exchanger 63, first exhaust gas heat exchanger 62, and waste heat supplying heat exchanger 70.

A heat medium circulation pump 67 is arranged at the heat medium circulation conduit 66 to pump the heat medium.

An expansion tank 68 for containing gas generated as the heat medium is circulated is arranged at the inlet side of the heat medium circulation pump 67.

Meanwhile, the cogeneration system further includes a radiating heat exchanger 90 adapted to radiate the heat recovered by the waste heat recovery unit 60 during a cooling operation of the heat pump type air conditioner 100.

The radiating heat exchanger 90 is connected to the heat medium circulation conduit 66 via a radiating bypass conduit 91, so that the heat medium passing through the heat medium circulation conduit 66 bypasses the waste heat supplying heat exchanger 70.

A three-way valve is arranged at a junction of the radiating bypass conduit 91 and the heat medium circulation conduit 66.

The description of the cogeneration system in accordance with the embodiment of the present invention will be given only in conjunction with the case in which heat of the radiating heat exchanger is emitted to the air, but the heat may also be used in a hot water supply tank or thermal storage tank.

A radiating fan 93 is arranged at the radiating heat exchanger 90 to blow outdoor air to the radiating heat exchanger 90.

Meanwhile, the heat pump type air conditioner 100 may be constructed such that the indoor unit 101 and the outdoor unit 102 are singular or at least one of the indoor unit 101 and the outdoor unit 102 is plural. Here, the following description will be given only in conjunction with the case in which the heat pump air conditioner includes a plurality of indoor units 101 and a plurality of outdoor units 102.

The plurality of indoor units 101 each include an indoor expansion valve 103 and an indoor heat exchanger 104, and the plurality of outdoor units 102 each includes a compressor 105, a four-way valve 106, an outdoor heat exchanger 107, and an outdoor expansion valve 108.

The indoor unit 101 and the outdoor unit 102 are interconnected by a refrigerant circulating path 110.

Meanwhile, the waste heat supplying heat exchanger connecting conduit 80 includes an indoor unit connecting conduit 81 which connects the waste heat supplying heat exchanger 70 and the indoor unit 101 and an outdoor unit connecting conduit 82 which connects the waste heat supplying heat exchanger 70 and the outdoor unit 102.

That is, the waste heat supplying heat exchanger 70 is connected to the indoor unit 101 and the outdoor unit 102 by each single flow path, respectively.

A first bypass conduit is formed between the indoor unit connecting conduit 81 and the outdoor unit connecting conduit 82 to guide the refrigerant emerging from the outdoor unit 102 during a cooling operation of the heat pump type air conditioner 100 to bypass the waste heat supplying heat exchanger 70 and directly enter the indoor unit 101.

A first non-return valve 84 is arranged at the first bypass conduit 83 to prevent reverse flow of the refrigerant emerging from the indoor unit 101 during the heating operation of the heat pump type air conditioner 100 to the first bypass conduit 83.

An expansion valve 85 is arranged at the indoor unit connecting conduit 81 to expand the refrigerant introduced into the waste heat supplying heat exchanger 70 from the indoor unit 101 during the heating operation of the heat pump type air conditioner 100.

A second bypass conduit 86 is formed at the indoor unit connecting conduit 81 to bypass the expansion valve 85 according to an outdoor temperature, and a first heating valve 87 is arranged at the second bypass conduit 86 to open and close the second bypass conduit 86.

A second non-return valve 86 is arranged at the outdoor unit connecting conduit 82 to prevent reverse flow of the refrigerant emerging from the outdoor heat exchanger 107 during the heating operation of the heat pump type air conditioner 100 to the waste heat supplying heat exchanger 70.

The outdoor unit 102 has an outdoor heat exchanger connecting conduit 120 for connecting the outdoor unit connecting conduit 82 and the outdoor heat exchanger 107 and a compressor connecting conduit 125 for connecting the outdoor unit connecting conduit 82 and a suction side of the compressor 105.

The outdoor heat exchanger connecting conduit 120 consists of a cooling path 121 adapted to guide the refrigerant passed through the outdoor heat exchanger 105 during a cooling operation of the heat pump type air conditioner 100 to flow therethough, and a heating path 122 adapted to guide the refrigerant passed through the waste heat supplying heat exchanger 70 to enter the outdoor heat exchanger 107 when the heat pump type air conditioner 100 is in a heating mode and the outdoor temperature is higher than a set temperature.

A cooling valve 123 is arranged at the cooling path 121 to open the cooling path 121 during the cooling operation of the heat pump type air conditioner 100.

An outdoor expansion valve 108 is arranged at the heating path has 122 to expand the refrigerant passing through the heating path 122.

A second heating valve 126 is arranged at the compressor connecting conduit 125 to open the compressor connecting conduit 125 when the heat pump type air conditioner 100 is in a heating mode and the outdoor temperature is lower than a set temperature.

Hereinafter, operation of the cogeneration system having the above-described configuration will be described.

When the engine 52 is driven, the generator 50 produces electricity by the driving force of the engine 52. The electricity produced by the generator 50 is supplied to the heat pump type air conditioner 100.

Exhaust gas waste heat and cooling water waste heat from the engine 52 are recovered by the cooling water heat exchanger 61 and the first and second exhaust gas heat exchangers 62 and 63, respectively.

The heat medium on the heat medium circulation conduit 66 is pumped by the heat medium circulation pump 67, so that the heat medium recovers waste heat while passing through the cooling water heat exchanger 61, second exhaust gas heat exchanger 63, and first exhaust gas heat exchanger 62.

Meanwhile, as shown in FIG. 2, during a cooling operation of the heat pump type air conditioner 100, the three-way valve 92 opens the radiating conduit 91, so that the recovered heat is emitted to the air via the radiating heat exchanger 90.

In the outdoor unit 102, the compressor 105 is driven, and the four-way valve 106 is switched to a heating mode.

Thus, the refrigerant compressed in the compressor 105 sequentially passes through the four-way valve 106 and the outdoor heat exchanger 107.

The cooling valve 123 is turned on to thus open the cooling path 121, so that the refrigerant that has passed through the outdoor heat exchanger 107 escapes from the outdoor unit 102 through the cooling path 121.

At this time, the outdoor expansion valve 108 and the second heating valve 126 are turned off, to thus shield the compressor connecting conduit 125 and the heating path 122.

The refrigerant emerging from the outdoor unit 102 is introduced into the outdoor unit connecting conduit 82, then flowed to the indoor unit connecting conduit 81 via the first bypass conduit 83, and then introduced into the indoor unit 101.

At this time, the first heating valve 87 and the expansion valve 85 are turned off, respectively, to prevent the refrigerant from being introduced into the waste heat supplying heat exchanger 70.

The refrigerant introduced into the indoor unit 101 passes through the indoor expansion valve 103 and the indoor heat exchanger 104, and then is re-circulated into the outdoor unit 102 via the refrigerant circulating path 110.

On the other hand, as shown in FIG. 3, when the heat pump type air conditioner 100 operates in a heating mode, and the outdoor temperature is lower than a set temperature, the outdoor heat exchanger 107 is not used but the waste heat supplying heat exchanger 70 alone is used as an evaporator.

First, the three-way valve 92 opens the heat medium circulation conduit 66 so as to guide the heat medium to the waste heat supplying heat exchanger 70.

The heat medium on the heat medium circulation conduit 66 is pumped by the heat medium circulation pump 67, so that the heat medium recovers waste heat while passing through the cooling water heat exchanger 61, second exhaust gas heat exchanger 63, and first exhaust gas heat exchanger 62, and thereafter the recovered waste heat is transferred to the waste heat supplying heat exchanger 70.

In the outdoor unit 102, the compressor 105 is driven, and the four-way valve 106 is switched to a heating mode.

The refrigerant compressed in the compressor 105 passes through the four-way vale 104 and the indoor expansion valve 103, and then is introduced into the waste heat supplying heat exchanger via the indoor unit connecting conduit 81.

At this time, the expansion valve 85 is turned on, and the first heating valve 72 is turned off, to thus shield the second bypass conduit 86.

Thus, the refrigerant emerging from the indoor unit 101 does not pass through the second bypass conduit 86 but passes through the expansion valve 85.

The refrigerant expanded in the expansion valve 85 is supplied with heat while passing through the waste heat supplying heat exchanger 70, and thereafter introduced into the outdoor unit 102 via the outdoor unit connecting conduit 82.

In the outdoor unit 102, the second heating valve 126 is turned on to thus open the compressor connecting conduit 125, and the cooling valve 123 and the outdoor expansion valve 108 are turned off, to thus shield the cooling path 121 and the heating path 122, respectively.

Thus, the refrigerant introduced into the outdoor unit 102 is not introduced into the outdoor heat exchanger 70, but circulated into the compressor 105 via the compressor connecting conduit 125.

That is, when the outdoor temperature is lower than a set temperature, the outdoor heat exchanger 107 is not used, and the waste heat supplying heat exchanger 70 alone is used.

Accordingly, it is possible to provide a constant heating capacity irrespective of outdoor temperature, and prevent the outdoor heat exchanger 107 from being frosted.

Meanwhile, as shown in FIG. 4, when the heat pump type air conditioner 100 is in a heating mode, and the outdoor temperature is higher than a set temperature, the outdoor heat exchanger 107 alone is used as an evaporator.

That is, the engine 52 is not driven, and accordingly the heat pump type air conditioner 100 is supplied with only commercial electric power from an external power source.

Thus, the refrigerant compressed in the compressor 105 escapes from the outdoor unit 102 via the four-way valve 106, and then is introduced into the indoor unit 101.

The refrigerant introduced into the indoor unit 101 passes through the indoor heat exchanger 104 and the indoor expansion valve 103, and then passes through the waste heat supplying heat exchanger 70 via the indoor unit connecting conduit 81.

At this time, the first heating valve 87 is turned on, to thus open the second bypass conduit 86, and the expansion valve 85 is turned off.

Thus, the refrigerant does not pass through the expansion valve 85, but passes through the waste heat supplying heat exchanger 70 via the second bypass conduit 86.

Here, because the engine 52 is not driven, the waste heat supplying heat exchanger 70 is unable to be supplied with waste heat of the engine 52, so that the waste heat supplying heat exchanger 70 does not functions as an evaporator.

The refrigerant that has passed through the waste heat supplying heat exchanger 70 is introduced into the outdoor unit 102.

At this time, the outdoor expansion valve is turned on, to thus open the heating path 122, and the second heating valve 126 and the cooling valve 123 are turned off, to thus shield the compressor connecting conduit 125 and the cooling path 121, respectively.

Thus, the refrigerant introduced into the outdoor unit 102 is introduced into the heating path 122 and expanded in the outdoor expansion valve 108, and thereafter evaporated in the outdoor heat exchanger 107.

The refrigerant evaporated in the outdoor heat exchanger 107 is circulated into the compressor 105.

Accordingly, when the heat pump type air conditioner 100 is in a heating mode, and the outdoor temperature is higher than a set temperature, the outdoor heat exchanger 107 alone functions as an evaporator, thereby making it possible to operate the heat pump type air conditioner 100 by an external power source when a failure occurs in the engine 52 or the generator 50.

The effects of the thus-constructed cogeneration system in accordance with the present invention will be described below.

The thus-constructed cogeneration system in accordance with the invention is constructed such that the waste heat recovered from the engine is supplied to the heat pump type air conditioner through the waste heat supplying heat exchanger, thereby maximizing heating capacity and efficiency.

Additionally, the waste heat supplying heat exchanger is connected to the indoor unit and the outdoor unit by each single flow path, respectively, so that the flow path between the waste heat supplying heat exchanger and the heat pump type air conditioner is minimized, thereby reducing installation costs and flow resistance.

Additionally, it is advantageous in that it is easy to connect the waste heat supplying heat exchanger even when installing additional indoor and outdoor units.

Additionally, it is advantageous in that it is possible to provide a constant heating capacity irrespective of outdoor temperature and prevent frost formation on the outdoor heat exchanger because the refrigerant is evaporated by the waste heat supplying heat exchanger when the heat pump type air conditioner operates in the heating mode and the outdoor temperature is lower than a set temperature.

Additionally, it is advantageous in that it is possible to operate the heat pump type air conditioner only by an external power source because the outdoor heat exchanger alone can be used as an evaporator when the heat pump type air conditioner operates in the heating mode and the outdoor temperature is higher than a set temperature.

Additionally, it is advantageous in that both the waste heat supplying heat exchanger and the outdoor heat exchanger can be used as an evaporator.

## Claims

1. A cogeneration system, comprising:
a generator;
a drive source, which operates to drive the generator, and generates heat;
a waste heat recovery unit, which recovers the waste heat of the driving, source;
a heat pump type air conditioner, which is supplied with electric power from the generator, and includes an indoor unit and outdoor unit;
a waste heat supplying heat exchanger which supplies the heat recovered by the waste heat recovery unit to the heat pump type air conditioner; and
a waste heat supplying heat exchanger connecting conduit adapted to guide a refrigerant emerging from the indoor unit during a heating operation of the heat pump type air conditioner to enter the outdoor unit through the waste heat supplying heat exchanger.

2. The cogeneration system of claim 1, wherein the waste heat supplying connecting conduit comprises an indoor unit connecting conduit which connects the waste heat supplying heat exchanger and the indoor unit and an outdoor unit connecting conduit which connects the waste heat supplying heat exchanger and the outdoor unit.

3. The cogeneration system of claim 1, wherein a first bypass conduit is formed at the waste heat supplying heat exchanger connecting conduit to guide the refrigerant emerging from the outdoor unit during a cooling operation of the heat pump type air conditioner to bypass the waste heat supplying heat exchanger.

4. The cogeneration system of claim 3, wherein a first non-return valve is arranged at the first bypass conduit to prevent reverse flow of the refrigerant emerging from the indoor unit during the heating operation of the heat pump type air conditioner to the first bypass conduit.

5. The cogeneration system of claim 1, wherein an expansion valve is arranged at the waste heat supplying heat exchanger connecting conduit to expand the refrigerant introduced into the waste heat supplying heat exchanger during the heating operation of the heat pump type air conditioner.

6. The cogeneration system of claim 5, wherein a second bypass conduit is formed at the waste heat supplying heat exchanger connecting conduit to bypass the expansion valve according to an outdoor temperature, and
a first heating valve is arranged at the second bypass conduit to open and close the second bypass conduit.

7. The cogeneration system of claim 1, wherein a second non-return valve is arranged at the waste heat supplying heat exchanger connecting conduit to prevent reverse flow of the refrigerant emerging from the outdoor heat exchanger during the heating operation of the heat pump type air conditioner to the waste heat supplying heat exchanger.

8. The cogeneration system of claim 2, wherein the outdoor unit has an outdoor heat exchanger connecting conduit for connecting the outdoor unit connecting conduit and the outdoor heat exchanger and a compressor connecting conduit for connecting the outdoor unit connecting conduit and a suction side of the compressor in the outdoor unit.

9. The cogeneration system of claim 8, wherein a second heating valve is arranged at the compressor connecting conduit to open the compressor connecting conduit when the heat pump type air conditioner is in a heating mode and the outdoor temperature is lower than a set temperature.

10. The cogeneration system of claim 8, wherein the outdoor heat exchanger connecting conduit consists of a cooling path adapted to guide the refrigerant passed through the outdoor heat exchanger during a cooling operation of the heat pump type air conditioner to flow therethough, and a heating path adapted to guide the refrigerant passed through the waste heat supplying heat exchanger to enter the outdoor heat exchanger when the heat pump type air conditioner is in a heating mode and the outdoor temperature is higher than a set temperature.

11. The cogeneration system of claim 8, wherein a cooling valve is arranged at the cooling path to open the cooling path during the cooling operation of the heat pump type air conditioner.

12. The cogeneration system of claim 8, wherein an outdoor expansion valve is arranged at the heating path to expand the refrigerant passing through the heating path.
